# EUROPÄISCHE PATENTSCHRIFT

(11) **EP 1 802 483 B1**
(45) Veröffentlichungstag und Bekanntmachung des Hinweises auf die Patenterteilung: **18.02.2009**
(21) Anmeldenummer: 05792746.9
(22) Anmeldetag: 30.09.2005
(51) Int. Cl.: B60K 28/16

(54) **ANTI-SCHLUPF STEUERVERFAHREN FÜR EIN ANTRIEBSYSTEM IN EINEM KRAFTFAHRZEUG**
ANTI-SLIP CONTROL METHOD FOR A DRIVE SYSTEM IN A MOTOR VEHICLE
PROCEDE DE REGULATION ANTIPATINAGE POUR UN SYSTEME DE TRANSMISSION D'UN VEHICULE AUTOMOBILE

(30) Priorität: 20.10.2004 DE 102004050994
(43) Veröffentlichungstag der Anmeldung: 04.07.2007
(73) Patentinhaber: Bayerische Motoren Werke Aktiengesellschaft, 80809 München (DE)
(72) Erfinder: FUCHS, Emanuel, Rochester 48307, Michigan (US); SCHUMACHER, Hubert, 86179 Augsburg (DE)
(86) Internationale Anmeldenummer: PCT/EP2005/010553
(87) Internationale Veröffentlichungsnummer: WO 2006/042629

(56) Entgegenhaltungen:
- US-A- 5 018 595
- PATENT ABSTRACTS OF JAPAN Bd. 013, Nr. 258 (M-838), 15. Juni 1989 (1989-06-15) -& JP 01 062525 A (KOMATSU LTD), 9. März 1989 (1989-03-09)
- PATENT ABSTRACTS OF JAPAN Bd. 016, Nr. 021 (M-1201), 20. Januar 1992 (1992-01-20) -& JP 03 237233 A (TOYOTA AUTOM LOOM WORKS LTD), 23. Oktober 1991 (1991-10-23)
- PATENT ABSTRACTS OF JAPAN Bd. 2000, Nr. 10, 17. November 2000 (2000-11-17) -& JP 2000 204992 A (DENSO CORP), 25. Juli 2000 (2000-07-25)

## Beschreibung

Die Erfindung bezieht sich auf ein Verfahren zum Steuern eines Antriebssystems in einem Kraftfahrzeug nach dem Oberbegriff des Patentanspruchs 1.

Ein derartiges Verfahren ist beispielsweise aus der DE 196 37 210 A1 bekannt. Bei diesem bekannten Verfahren werden zum einen das über das Fahrpedal angeforderte Radmoment und zum anderen ein Sammelsurium verschiedener Betriebsparameter in einer zentralen Einheit in nicht näher dargestellter Weise zum zentralen Steuern eines Antriebssystems miteinander verarbeitet.

Es ist Aufgabe der Erfindung, ein Verfahren zum Steuern eines Antriebssystems in einem Kraftfahrzeug im Hinblick auf eine Komfortoptimierung zu verbessern.

Diese Aufgabe wird erfindungsgemäß durch die Merkmale des unabhängigen Patentanspruchs 1 gelöst. Vorteilhafte Weiterbildungen sind die Gegenstände der abhängigen Patentansprüche.

Der Erfindung liegt folgende Erkenntnis zugrunde:

Durch das erfindungsgemäße Verfahren soll eine Steuerungsstrategie für Antriebssysteme in Kraftfahrzeugen bei nicht ausreichenden Kraftschlussverhältnissen mittels variabler Interpretation des Leistungssteuerungsorgans (Fahrpedals) geschaffen werden. Dabei wird von folgendem Stand der Technik ausgegangen: Durchdrehneigung bzw. Radschlupf wird üblicherweise von Stabilitätsregelsteuergeräten (z. B. ESP, DSC) sensiert und auch an andere Steuergeräte, insbesondere an Motorsteuergeräte zur Steuerung einer Brennkraftmaschine und/oder gegebenenfalls an Getriebesteuergeräte zur Steuerung automatisierter Getriebe, als Information übermittelt. Bei Auftreten von Schlupf reduziert zunächst das Motorsteuergerät mittels Eingriffen in die Drehmomentsteuerung der Brennkraftmaschine bzw. des Motors das an den Abtriebsrädern wirkende Gesamtradmoment. Dabei wird in der Regel von der Annahme ausgegangen, dass die Übersetzung des Getriebes sich während des Regelvorgangs nicht ändert. Weiterhin sind Getriebesteuergeräte bekannt, die ihrerseits auf die Durchdrehneigung der Antriebsräder reagieren, indem sie durch die Änderung der wirksamen Übersetzung das Gesamtradmoment soweit reduzieren, bis der festgestellte Radschlupf abgebaut ist. Schließlich ist auch eine Radmomentenreduzierung durch das Bremssystem bzw. die Stabilitätsregelsteuergeräte möglich.

Die Erfindung schlägt einen integrierten Ansatz vor, bei dem das Fahrpedal als Leistungssteuerorgan eingesetzt wird und über dessen variable Interpretation die Leistungsabgabe an die Räder so gesteuert wird, dass auftretender Radschlupf zunächst abgebaut und in der Folgeregelung vermieden wird, um die Notwendigkeit einer komplexen Koordinierung einer Radmoment-Steuerung durch mehrere Einzelkomponenten zu minimieren.

Es wird vorausgesetzt, dass das Fahrpedal als Leistungssteuerorgan dient. Damit steuert die Fahrpedalstellung bzw. der die Fahrpedalstellung wiedergebende Sensorsignalwert die Leistungsabgabe bzw. Drehmomentabgabe von der Brennkraftmaschine die Räder. Das Radmoment ergibt sich aus der an die Räder abgegebenen Leistung abzüglich der Verluste im Antriebstrang dividiert durch die anliegende Drehzahl oder Geschwindigkeit. Unter der Größe Radmoment soll auch jede zum Radmoment proportionale Größe verstanden werden.

Das vom Fahrpedal proportional zu seiner Stellung abgegebene Signal wird in einer Kennlinie bzw. in einem Kennfeld bei zusätzlicher Abhängigkeit von Geschwindigkeit und anderen Parametern in eine Leistungsanforderung bzw. in ein Soll-Radmoment umgesetzt. Der Zusammenhang zwischen Eingangswert und Ausgabewert der Kennlinie bzw. des Kennfelds kann dynamisch korrigiert werden. Diese Kennlinien bzw. Kennfelder werden im folgenden zusammenfassend als Grundkennlinie bezeichnet, da die Erfindung vorrangig die Abhängigkeit des Soll-Radmoments von der Fahrpedalstellung betrifft. Die erfindungsgemäßen Kennlinien können sich also auch in Kennfeldern wieder finden, wenn die Abhängigkeit von weiteren Parametern eine Rolle spielt.

Das Soll-Radmoment bzw. die angeforderte Leistung wird vom Motor in Form von Drehmoment und zugehöriger Drehzahl bereitgestellt. Ein Automatikgetriebe sorgt im Antriebstrang gegebenenfalls dafür, dass sich die für die angeforderte Leistung notwendige Motordrehzahl einstellt.

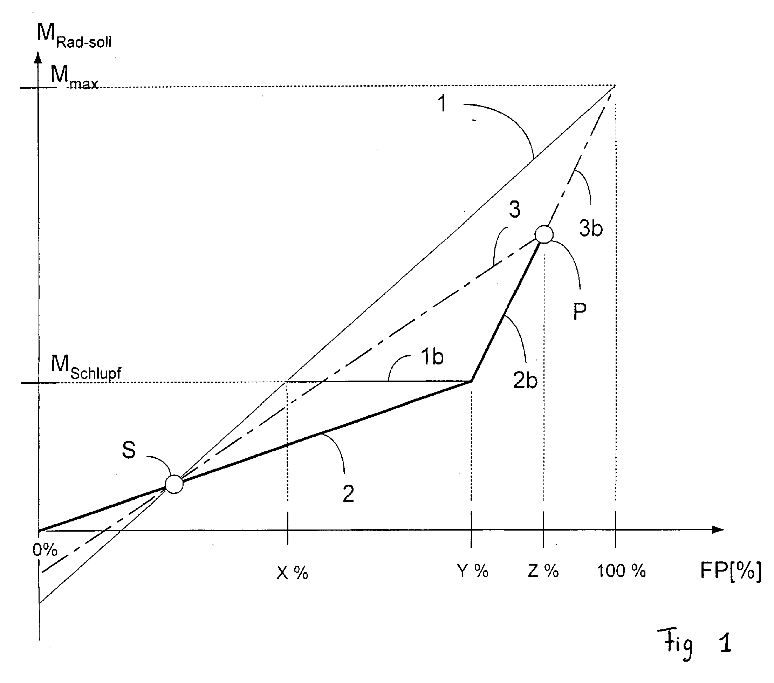

Mittels der in der Zeichnung dargestellten Kennlinien soll das durch ein elektronisches Steuergerät durchgeführte erfindungsgemäße Verfahren näher erläutert werden:

Das hier nicht dargestellte elektronische Steuergerät, beispielsweise ein ohnehin vorhandenes Brennkraftmaschinensteuergerät und/oder Automatikgetriebesteuergerät, erhält als Eingangssignal die Fahrpedalstellung FP und eine Information über das Vorliegen von Radschlupf. Entsprechend abgespeicherter Kennlinien bzw. Kennfelder ermittelt das Steuergerät abhängig von der Fahrpedalstellung FP und gegebenenfalls weiteren hier nicht näher erläuterten Betriebsparametern ein vom Fahrer gewünschtes Soll-Radmoment M_{rad-soll}

Für das erfindungsgemäße Verfahren wird bei der Ermittlung des Soll-Radmoments M_{rad-soll} bzw. der Leistungsanforderung lediglich die Abhängigkeit von der Fahrpedalstellung FP erläutert.

Liegt kein Radschlupf vor, ist die Grundkennlinie 1 maßgeblich für eine grundsätzliche Zuordnung eines Soll-Radmoments M_{rad-soll} zu einer Fahrpedalstellung FP.

Bei Vorliegen von Radschlupf wird ein Grenzmoment M_{Schlupf} abspeichert. Das Grenzmoment als von der Fahrbahn abhängig vom Reibwert gerade noch abstützbares Radmoment kann auf verschiedene Weise ermittelt werden.

Beispielsweise kann im Falle einer Drehmomentänderung das beobachtete Radmoment bei Radabriss als Grenzmoment definiert werden. Dazu kann bei Vorliegen von Radschlupf das Ist-Radmoment derart reduziert werden, dass gerade kein Radschlupf mehr auftritt, und dieses Ist-Radmoment im Steuergerät als Grenzmoment M_{Schlupf} abspeichert werden.

Das Grenzmoment kann auch insbesondere im Falle eines Radabrisses bei konstantem Drehmoment aus der Differenz des Antriebsmoments zu dem für den Hochlauf der Räder (bei bekanntem Massenträgheitsmoment des Antriebsstrangs) aufzuwendenden Drehmoment gebildet werden. Bei einem Hochlauf der Räder ist die Differenz der Winkelbeschleunigungen zwischen den angetriebenen und nicht angetriebenen Rädern zu überwinden.

Im Steuergerät wird auch die Fahrpedalstellung X%, bei der der Radschlupf aufgetreten ist, abgespeichert. Für eine Fahrpedalstellung FP, die größer ist als die Fahrpedalstellung X%, bei der der Radschlupf aufgetreten ist, wird die Grundkennlinie 1 geändert bzw. verlassen, indem das Soll-Radmoment M_{Rad-soll} auf das Grenzmoment M_{Schlupf} begrenzt wird. Hierdurch ergibt sich die Kennlinie 1b für FP>X%. Dies gilt, bis die Fahrpedalstellung FP in die Nullstellung 0% zurückkehrt.

Das Steuergerät speichert bei einer Rückkehr der Fahrpedalstellung FP auf die Nullstellung 0% die zuvor maximal erreichte Fahrpedalstellung Y% nach Auftreten des Radschlupfes ab. Voraussetzung ist, dass bis dahin kein weiterer Radschlupf mehr aufgetreten ist. Bei erneuter Erhöhung der Fahrpedalstellung FP aus der Nullstellung 0% heraus, gibt das Steuergerät anstelle der Grundkennlinie 1 und auch anstelle der veränderten Grundkennlinie 1 b eine leistungsbegrenzende kontinuierlich ansteigende Kennlinie 2 zwischen der Nullstellung 0% und der zuvor maximal erreichten Fahrpedalstellung Y% vor. Diese Kennlinie 2 erreicht ihr Maximum in Form des Grenzmoments M_{Schlupf} als Soll-Radmoment M_{Rad-soll} bei der zuvor maximal erreichten Fahrpedalstellung Y%. Vorzugsweise verläuft die Kennlinie 2 linear und beginnt gegebenenfalls bei einem Soll-Radmoment von Null. Auf die entsprechend der Grundkennlinie 1 üblicherweise vorgegebene Schlepp-Radmomentanforderung, die eine Eigenlenkreaktion des Fahrwerks zur Folge haben kann, wird hier aus Gründen maximaler Fahrstabilität verzichtet, insbesondere auch bei Auftreten von Schlupf.

Das Steuergerät gibt bei Überschreiten der zuvor maximal erreichten Fahrpedalstellung Y% eine leistungsmaximierende Kennlinie 2b vor, durch die das Soll-Radmoment M_{Rad-soll} ausgehend vom Grenzmoment M_{Schlupf} ab der zuvor maximal erreichten Fahrpedalstellung Y% bis zum maximal möglichen Soll-Radmoment Mₘₐₓ bei maximal möglicher Fahrpedalstellung 100% kontinuierlich ansteigt. Dies ist jedoch nur möglich, solange kein weitere Radschlupf vorliegt, da sonst wieder ein Grenzmoment bestimmt werden muss (entsprechend Kennlinie 1 b). Die Kennlinien 2 und 2b sind bis zum Erreichen einer im Vergleich zur zuvor maximal erreichten Fahrpedalstellung Y% erhöhten Fahrpedalstellung wirksam. Das Steuergerät speichert zumindest immer die jeweils maximal erreichte Fahrpedalstellung FP ab.

Wenn eine im Vergleich zur zuvor maximal erreichten Fahrpedalstellung Y% erhöhte Fahrpedalstellung FP>Y% erreicht wurde, und die Fahrpedalstellung erneut auf die Nullstellung (0%) zurückgekehrt ist, und bis dahin kein erneuter Radschlupf aufgetreten ist, geht das Steuergerät folgendermaßen vor:

Die vor erneuter Rückkehr maximal erreichte und im Vergleich zur zuvor maximal erreichten Fahrpedalstellung Y% erhöhte Fahrpedalstellung Z% bleibt abgespeichert. Es wird zwischen der Nullstellung 0% und der erhöhten maximalen Fahrpedalstellung Z% eine weitere neue Kennlinie 3 in Form einer Geraden vorgegeben, die durch den Schnittpunkt S der Grundkennlinie 1 mit der leistungsbegrenzenden Kennlinie 2 und durch den der erhöhten maximalen Fahrpedalstellung Z% zugeordneten Punkt P der leistungsmaximierenden Kennlinie 2b definiert wird. Das Maximum dieser Kennlinie 3 ist die Rückkehr zur Grundkennlinie 1, wenn die erhöhte maximale Fahrpedalstellung gleich der maximal möglichen Fahrpedalstellung 100% ist. Ist also wieder ein hoher Kraftschluss der Räder auf der Straße gegeben, wird möglichst schnell die maximal mögliche Leistung wieder zur Verfügung gestellt, sofern sie vom Fahrer angefordert wird.

Diese als "Schlupfregelpedal" bezeichenbare variable Fahrpedalcharakteristik trägt erheblich zur Reduzierung der notwendigen Eingriffe zur Leistungsreduzierung bei ungenügendem Kraftschluss der Räder und damit zur Komfortverbesserung bei. Auch programmiertechnisch beurteilt ist auf einfache Weise ein optimiertes Gesamtverhalten des Fahrzeuges erreichbar.

Probleme wie die Beschädigung des Katalysators durch lang anhaltende Zündwinkeleingriffe, die bei der üblichen Schlupfregelung (mit DSC- oder ESP-Systemen) wegen der Erfordernis der schnellen Lastaufregelung notwendig sind, entfallen.

## Patentansprüche

1. Verfahren zum Steuern eines Antriebssystems in einem Kraftfahrzeug mit mindestens einem elektronischen Steuergerät, das als Eingangssignal die Fahrpedalstellung erfasst und daraus entsprechend einer Grundkennlinie ein vom Fahrer gewünschtes Soll-Radmoment ermittelt, **dadurch gekennzeichnet, dass** das Steuergerät als weiteres Eingangssignal eine Information über das Vorliegen von Radschlupf erhält, bei Vorliegen von Radschlupf ein Grenzmoment (M_{Schlupf}) abspeichert und die Grundkennlinie (1) für eine Fahrpedalstellung (FP), die größer ist als die Fahrpedalstellung (X%), bei der der Radschlupf aufgetreten ist, ändert, indem das Soll-Radmoment (M_{Rad-soll}) auf das Grenzmoment (M_{Schlupf}) begrenzt wird.

2. Verfahren nach Patentanspruch 1, **dadurch gekennzeichnet, dass** das Steuergerät nach einer Rückkehr der Fahrpedalstellung (FP) auf die Nullstellung (0%) die zuvor maximal erreichte Fahrpedalstellung (Y%) nach Auftreten des Radschlupfes abspeichert und bei erneuter Erhöhung der Fahrpedalstellung aus der Nullstellung (0%) heraus anstelle der Grundkennlinie (1) eine leistungsbegrenzende kontinuierlich ansteigende Kennlinie (2) zwischen der Nullstellung und der zuvor maximal erreichten Fahrpedalstellung (Y%) derart vorgibt; dass sie ihr Maximum in Form des Grenzmoments (M_{Schlupf}) als Soll-Radmoment (M_{Rad-soll}) bei der zuvor maximal erreichten Fahrpedalstellung (Y%) erreicht.

3. Verfahren nach Patentanspruch 2, **dadurch gekennzeichnet, dass** das Steuergerät bei Überschreiten der zuvor maximal erreichten Fahrpedalstellung (Y%) eine leistungsmaximierende Kennlinie (2b) vorgibt, durch die das Soll-Radmoment (M_{Rad-soll}) ausgehend vom Grenzmoment (M_{Schlupf}) ab der zuvor maximal erreichten Fahrpedalstellung (Y%) bis zum maximal möglichen Soll-Radmoment (Mₘₐₓ) bei maximal möglicher Fahrpedalstellung (100%) kontinuierlich ansteigt.

4. Verfahren nach Patentanspruch 3, **dadurch gekennzeichnet, dass** das Steuergerät nach erneuter Rückkehr der Fahrpedalstellung auf die Nullstellung (0%) ausgehend von einer im Vergleich zur zuvor maximal erreichten Fahrpedalstellung (Y%) erhöhten Fahrpedalstellung (FP>Y%), wenn bis dahin kein erneuter Radschlupf aufgetreten ist, zwischen der Nullstellung und einer maximalen erhöhten Fahrpedalstellung (Z%) eine Kennlinie (3) in Form einer Geraden vorgibt, die durch den Schnittpunkt (S) der Grundkennlinie (1) mit der leistungsbegrenzenden Kennlinie (2) und durch den der erhöhten maximalen Fahrpedalstellung (Z%; 100%) zugeordneten Punkt (P) der leistungsmaximierenden Kennlinie (2b) definiert wird.

## Claims

1. A method for controlling a drive system in a motor vehicle comprising at least one electronic control device, which detects the accelerator position as the input signal and determines therefrom, according to a basic characteristic curve, a desired wheel torque desired by the driver, the control device receives information about the presence of wheel slip as a further input signal, stores a limit torque (Mₛₗᵢₚ) when wheel slip is present and changes the basic characteristic curve (1) for an accelerator position (FP), which is greater than the accelerator position (X%), at which the wheel slip has occurred, in that the desired wheel torque (M_{wheel-desired}) is limited to the limit torque (Mₛₗᵢₚ).

2. A method according to claim 1, **characterised in that** after a return of the accelerator position (FP) to the zero position (0%), the control device stores the previous maximum accelerator position (Y%) reached after the occurrence of the wheel slip and in the event of a renewed increase in the accelerator position from the zero position (0%), instead of the basic characteristic curve (1), specifies a power-limiting continuously increasing characteristic curve (2) between the zero position and the previous maximum accelerator position (Y%) reached in such a way that it reaches its maximum in the form of the limit torque (Mₛₗᵢₚ) as the desired wheel torque (M_{wheel-desired}) at the previous maximum accelerator position (Y%) reached.

3. A method according to claim 2, **characterised in that** on exceeding the previous maximum accelerator position (Y%) reached, the control device specifies a power-maximising characteristic curve (2b), by means of which the desired wheel torque (M_{wheel-desired}), proceeding from the limit torque (Mₛₗᵢₚ) continuously increases from the previous maximum accelerator position (Y%) reached to the maximum possible desired wheel torque (Mₘₐₓ) at a maximum possible accelerator position (100%).

4. A method according to claim 3, **characterised in that** after a renewed return of the accelerator position to the zero position (0%), proceeding from an accelerator position (FP > Y%) which is increased in comparison to the previous maximum accelerator position (Y%) reached, if no renewed wheel slip has occurred by then, between the zero position and a maximum increased accelerator position (Z%), the control device specifies a characteristic curve (3) in the form of a straight line, which is defined by the intersection point (S) of the basic characteristic curve (1) with the power-limiting characteristic curve (2) and by the point (P) associated with the increased maximum accelerator position (Z%; 100%) of the power-maximising characteristic curve (2b).

## Revendications

1. Procédé de commande d'un système d'entraînement d'un véhicule automobile comportant au moins un appareil de commande électronique saisissant comme signal d'entrée, la position de la pédale d'accélérateur pour en déduire un couple de roue de consigne, souhaité par le conducteur, en fonction d'une courbe caractéristique de base,
**caractérisé en ce que**
- l'appareil de commande reçoit comme autre signal d'entrée, une information concernant l'existence d'un patinage de roue,
- il enregistre en mémoire un couple limite (M_{Schlupf}) en cas de patinage de roue, et
- il modifie la courbe caractéristique de base (1) si la position de la pédale d'accélérateur (FP) est supérieure à la position de la pédale d'accélérateur (X%) pour laquelle le patinage de roue s'est produit, en limitant le couple de roue de consigne (M_{Rad-soll}) par le couple limite (M_{Schlupf}).

2. Procédé selon la revendication 1,
**caractérisé en ce qu'**
- après le retour de la position de la pédale d'accélérateur (FP) à la position zéro (0%), l'appareil de commande mémorise la position maximale de la pédale d'accélérateur (Y%) atteinte préalablement, après que se soit produit le patinage de roue, et
- lors d'une nouvelle augmentation de la position de la pédale d'accélérateur à partir de la position zéro (0%), on remplace la courbe caractéristique de base (1), en prédéfinissant une courbe caractéristique (2) de limitation de puissance, croissant en continu, entre la position zéro et la position maximale de la pédale d'accélérateur (Y%), atteinte au préalable, pour atteindre son maximum sous la forme du couple limite (M_{Schlupf}) comme couple de roue de consigne (M_{Rad-soll}) pour la position maximale de la pédale d'accélérateur (Y%) atteinte préalablement.

3. Procédé selon la revendication 2,
**caractérisé en ce qu'**
en cas de dépassement de la position maximale de la pédale d'accélérateur (Y%) atteinte préalablement, l'appareil de commande prédéfinit une courbe caractéristique (2b) rendant maximale la puissance, et suivant laquelle, partant du couple limite (M_{Schlupf}), le couple de roue de consigne (M_{Rad-soll}) augmente en continu à partir de la position maximale de la pédale d'accélérateur (Y%) atteinte préalablement jusqu'au couple de roue de roue de consigne maximum possible (Mₘₐₓ) pour la position maximale possible (100%) de la pédale d'accélérateur.

4. Procédé selon la revendication 3,
**caractérisé en ce qu'**
après un nouveau retour de la position de la pédale d'accélérateur à la position zéro (0%), partant d'une position de pédale d'accélérateur (FP>Y%) augmentée par rapport à la position maximale de la pédale d'accélérateur (Y%) atteinte préalablement, si jusqu'alors il n'y a pas eu de nouveau patinage de roue, l'appareil de commande prédéfinit une courbe caractéristique (3) sous la forme d'une droite reliant la position zéro et une position maximale augmentée (Z%) de la pédale d'accélérateur, définie par le point d'intersection (S) de la courbe caractéristique de base (1) et de la courbe caractéristique de limitation de puissance (2) et par le point (P) de la courbe caractéristique (2b) rendant maximale la puissance, associés par la position maximale augmentée de la pédale d'accélérateur (Z% ; 100%).
